# EUROPEAN PATENT APPLICATION

(11) **EP 1 867 547 A2**
(43) Date of publication of application: **19.12.2007**
(21) Application number: 07011452.5
(22) Date of filing: 12.06.2007
(51) Int. Cl.: B62B 1/00, B62B 1/12, A45C 5/14

(54) **Transport trolley**

(30) Priority: 12.06.2006 CN 200620060191 U; 12.03.2007 CN 200720049172 U
(71) Applicant: Wong, David, Kowloon, Hong Kong (HK)
(72) Inventor: Wong, David, Kowloon, Hong Kong (HK)
(74) Representative: Zambardino, Umberto

(57) **Abstract**

A luggage trolley comprises a dragging bracket, a retractable drawbar, and at least a wheel set on the bottom of the dragging bracket. On the dragging bracket there is a wheel-moving assembly that can be opened to the forward dragging direction and form a supporting point. The luggage trolley can be very smooth and stable when dragged because it can form a stable structure having three supporting points including the two wheels and a newly-added wheel of the moving wheel-assembly. The newly-added wheel is the pivot which bears the most weight of luggage when the luggage inclines. It becomes the bearing support and greatly improves the mobility of the trolley when dragged and the stability of the trolley when standing.

## Description

### Field of technology

This application relates generally to transport trolleys and especially to a luggage trolley,

### Background

Usually, a conventional luggage trolley employs two or four caster wheels, which is not light in weight, and not convenient to use. When using these traditional luggage trolleys, the user must hold the operative handle and tilt the trolley, including the luggage to an advancing direction so that the two wheels at the advancing direction become the center of the gravity. An upward force must be applied to grip the trolley and, at the same, time a forward force must be applied to drag the trolley. The user feels very tired after using these luggage trolleys for a long time since different forces are applied at the same time for operating the trolley. The situation may even be worse if the luggage is loaded with heavy articles. Meanwhile, the trolley is difficult to operate and may even turn over if the articles contained in the luggage are unevenly distributed.

### Summary

Accordingly, an advanced trolley which is simple and convenient to operate is provided.

In addition, a trolley of the aforesaid character which can be manufactured with low costs is provided.

A luggage trolley comprises a dragging bracket, a retractable drawbar, and at least one wheel set on the bottom of the dragging bracket, wherein on the dragging bracket there is a wheel-moving assembly that can be opened to drag in a forward direction and form a supporting point.

A luggage trolley incorporates the wheel-moving assembly which comprises a wheel shaft and a moving wheel. One end of the wheel-moving assembly is pivotally connected to the dragging bracket and can be opened to the dragging forward direction while the other end of the wheel-moving assembly is mounted with the moving wheel.

A fixing assembly fixes the opening angle of the wheel-moving assembly. The fixing assembly comprises a sliding sleeve and two connecting rods. The sliding sleeve is mounted on the wheel-moving assembly and the two ends of each connecting rod respectively are pivotally connected to the sliding sleeve and the dragging bracket and can be rotated.

On the wheel-moving assembly there is a location device to fix the relative position between the fixing assembly and the wheel-moving assembly.

The location device is biased projection on the wheel-moving assembly.

On the dragging bracket there is an opening-control device to open or pack up the wheel-moving assembly. The opening-control device comprises a rotating transverse axle radially connected to the wheel-moving assembly, wherein a block is set on the rotating transverse axle or the wheel-moving assembly, and a push key on the retractable drawbar can be used to drive the block and open the wheel-moving assembly when being pushed by a human being.

The block transversely extends to connect the two ends of a rotating transverse axle. The retractable drawbar has double bars while at the bottom of the retractable drawbar a projecting push device is set in corresponding position to the block.

The rotating transverse axle is eccentric and the block is set on the far end. A restorable spring is set on the other side of the block opposite to the push key.

The block is set on the inner side of wheel-moving assembly. The retractable drawbar may be a single bar. At the bottom of the retractable drawbar, a projecting push device is set at corresponding positions to the block, with a bevel as the engaging interface between the block and the projecting push device.

On the opposite side of the rotating transverse axle to the wheel-moving assembly, there is a projection with a restorable spring.

The wheel-moving assembly comprises a wheel shaft and in the wheel shaft, a safety device is mounted.

The safety device comprises a retractable lockpin radially protruding out of the wheel shaft, and a lock pole mounted inside the wheel shaft to control the lockpin by longitudinally moving.

The bottom of retractable lockpin is an X-type biased device and the relative end of the lock pole is an inverse V-type structure while the two arms of an X-type biased device slides against the inverse V-type structure.

On the corresponding positions of the dragging bracket and the retractable drawbar, there are anchor points to fit to each other when being mounted.

The luggage trolley can be very smooth and stable when dragged because it can form a stable structure by 3 supporting points including the two wheels and a newly-added wheel, e.g., the moving wheel. The newly-added wheel is the pivot to which bears the most weight of a luggage when the luggage is inclining. It becomes the bearing support and greatly improves the mobility of the trolley when dragged and the stability of the trolley when standing,

### Brief description of the drawings

Fig. 1 is an illustration of a configuration of a trolley with luggage (showing the pack-up state of a wheel-moving assembly);
Fig. 2 is an illustration of a configuration of the trolley with luggage (showing the open state of a wheel-moving assembly);
Fig. 3 is an illustration of a configuration of the trolley with luggage (showing the state of being dragged);
Fig. 4 is a side view of the inner structure of the trolley;
Fig. 5 is a magnified view of a portion of Fig. 4;
Fig. 6 is an illustration of another embodiment of a trolley with luggage;
Fig. 7 is an illustration of a wheel-moving assembly when being packed up;
Fig. 8 and Fig. 8A respectively are a connecting illustration of a rotating transverse axle and wheel shaft and a magnified view of part AA thereof;
Fig. 9 and Fig. 9A respectively are a solid view of a usage state as an ordinary two-wheel dragging bracket of a trolley and a magnified view of part AB thereof;
Fig. 10, Fig. 10A and Fig. 10B respectively are a solid view of an open state of a wheel-moving assembly, a magnified view and a perspective view of part AC thereof;
Fig. 11, Fig. 11A respectively are an illustration of a safety device of a trolley and a magnified view of part AD thereof;
Fig. 12 is an illustration of another embodiment of a trolley (showing the pack-up state of a wheel-moving assembly);
Fig. 13 and Fig. 13A respectively are a side view of the trolley embodiment of Fig. 12 (used as an ordinary two-wheel structure) and a magnified view of part AE thereof;
Fig. 14 and Fig. 14A respectively are the side view of another embodiment of a trolley (showing the open state of a wheel-moving assembly) and the magnified view of part AF; and
Fig. 15 is an illustration of another embodiment of a trolley and luggage when the wheel-moving assembly is being used;
FIG. 16 is an illustration of another specified embodiment of present invention;
FIG. 16A is a magnified view of part AG shown in FIG. 16;
FIG. 17 is an illustration of working state of the embodiment shown in FIG. 16.

### Detailed description of the preferred embodiments

Various embodiments of a trolley are described with reference to the drawings, but the present invention is not restricted to the described embodiments.

### SPECIFIED EMBODIMENT 1

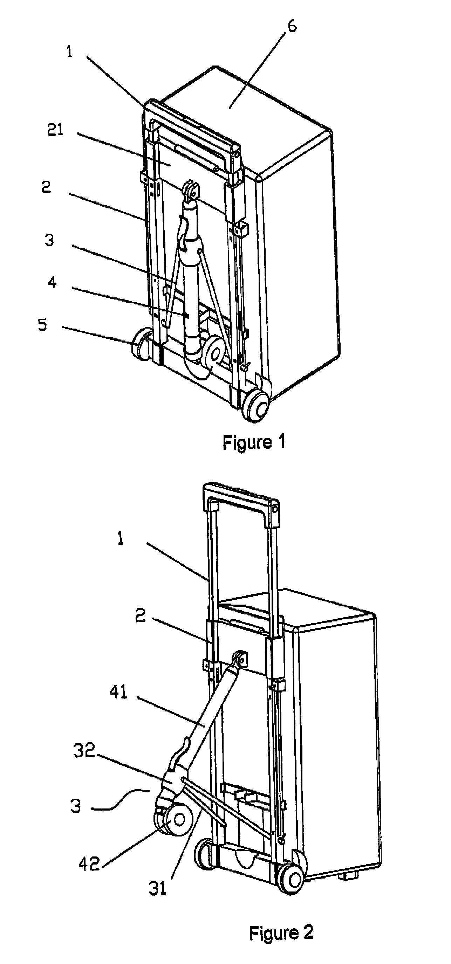

As showed in Fig. 1, this embodiment employs a new type of dragging trolley comprising a dragging bracket 2, a retractable drawbar 1, and wheels 5, as well as wheel-moving assembly 4 that is mounted on the bottom of the dragging bracket 2.

The retractable drawbar 1 is disposed at the top end of the dragging bracket in a sleeve arrangement and is retractable relative to the dragging bracket 2. The structure making the retractable drawbar 1 extend and retract is the same as existing technology. The retractable drawbar 1 has a double-bar drawbar configuration. Luggage 6 is fixed at one side of the dragging bracket 2.

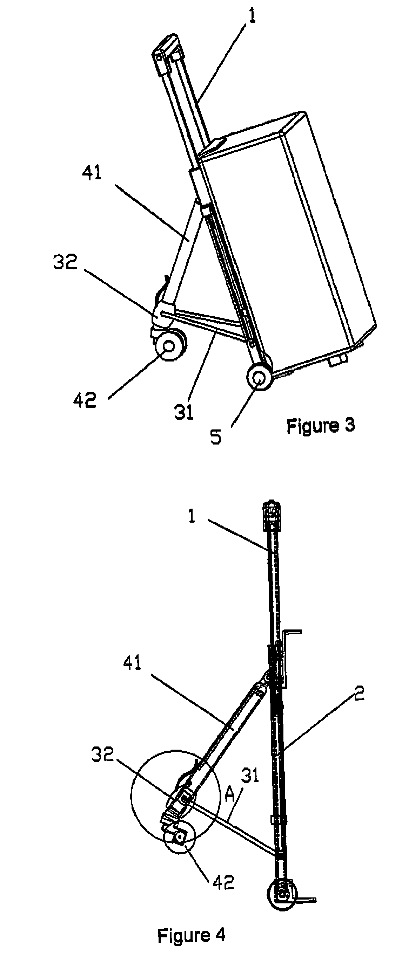

The wheel-moving assembly 4, which is set on the side near the dragging direction of the dragging bracket 2, comprises wheel shaft 41 and moving wheel 42 thereof. One end of the wheel shaft 41 is axially connecting to the side near dragging direction on the central beam 21 of the dragging bracket 2, while the other end mounts with the moving wheel 42. The moving wheel 42 can be rotated around the moving wheel axle. It also can be opened to the advancing direction of the dragging bracket 2 and forms a supporting point of the luggage (shown as Fig. 2 and Fig. 3).

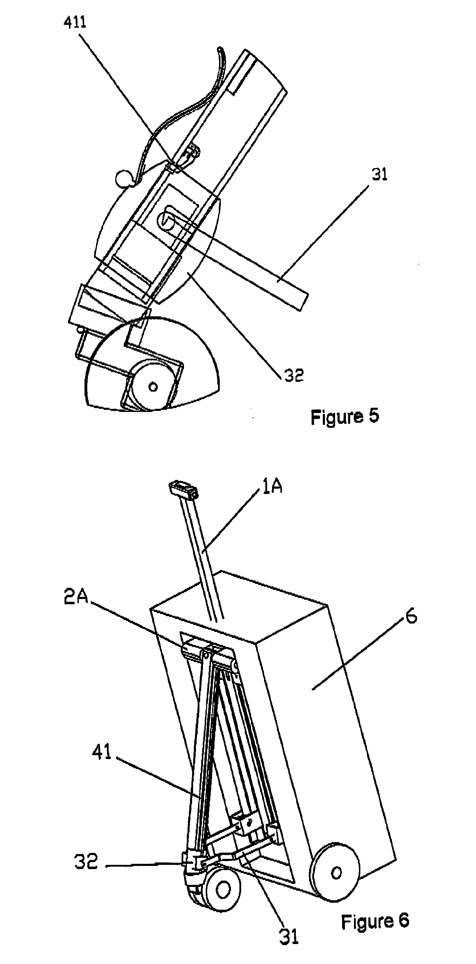

On the dragging bracket 2 there is mounted a supporting assembly 3 to fix the opening angle of the wheel-moving assembly 4. In this specified embodiment, the supporting assembly 3 comprises two connecting rods 31 and a sliding sleeve 32. The sliding sleeve 32 is slidably received on the wheel shaft 41 of the wheel-moving assembly 4 and is free to slide along with the wheel shaft 41. The two connecting rods 31 are mounted at one end to a little opening. One end of each connecting rod is connected to the sliding sleeve 32, the other end is connected to a mounting hole on the bottom of the wheel shaft on the dragging bracket 2. The connecting rods can be freely rotated. When the wheel-moving assembly 4 is positioned closest near the dragging bracket 2, the connecting rods 31 are also positioned close to the dragging bracket 2 and the sliding sleeve is on the top of the wheel shaft 41. As shown in Fig. 4 and Fig. 5, upon pivoting the wheel shaft 41 away from the dragging bracket 2, the sliding sleeve 32 slides down along the wheel shaft 41, driving the connecting rods 31 away from the dragging bracket 2, until the angle between the wheel-moving assembly 4 and the connecting rod 31 is a stable 90 degrees. A location device 411 is positioned on the body of the wheel shaft 41 to fix them. The location device 411 can be set as a flexible bevel convexity on the wheel shaft 41. After the sliding sleeve 32 slides across this location, the spring in the location device 411 will restore to fix the location of sliding sleeve 32.

The supporting assembly 3 is preferably a stay bar with one end connecting the bottom end of the wheel shaft 41 of the dragging bracket 2 and the other end being free to rotate. It works when fitted with the location device of wheel-moving assembly 4 (such as a location hole). After the wheel-moving assembly 4 is opened to the advancing direction of dragging bracket 2, the stay bar is turned and its working end is made to fit in the location device of wheel-moving assembly 4. Then the wheel-moving assembly is fixed in an opening state.

### SPECIFIED EMBODIMENT 2

As shown in Fig. 6, the trolley of this embodiment comprises a dragging bracket 2A, a retractable drawbar 1A, and wheels 5, as well as a wheel-moving assembly 4 that is disposed on the bottom of dragging bracket 2A.

The retractable drawbar 1A is mounted on the upper end of dragging bracket 2A in a sleeve arrangement and can slide along the dragging bracket 2A. This retractable drawbar 1A employs a single beam drawbar. The dragging bracket 2A is embedded in the reverse side of the luggage 6.

In the same manner as embodiment 1, the wheel-moving assembly 4, which is mounted on the dragging bracket 2A in the side of the advancing direction, comprises a wheel shaft 41 and a wheel 42. One end of wheel shaft 41 is hinged to the dragging bracket 2A on the transverse beam in the advancing direction while the other end is mounted with the wheel 42. The wheel 42 can rotate around the axle and is opened in the advancing direction of the dragging bracket 2A to form a supporting point. On the dragging bracket 2A a supporting assembly 3 is mounted to fix the opening angle of the wheel-moving assembly 4, which comprises two connecting rods 31 and one sliding sleeve 32. When the wheel-moving assembly 4 is positioned close to the dragging bracket, the connecting rod 31 is also positioned close to the dragging bracket while the sliding sleeve 32 is located on the top part of wheel shaft 41. When turning the wheel shaft 41 away from the dragging bracket 2A, the sliding sleeve 32 slides down along the wheel shaft 41 driving the connecting rods 31 away from the dragging bracket 2A , until the angle between the wheel shaft 41 and the connecting rod 31 is 90 degrees.

### SPECIFIED EMBODIMENT 3

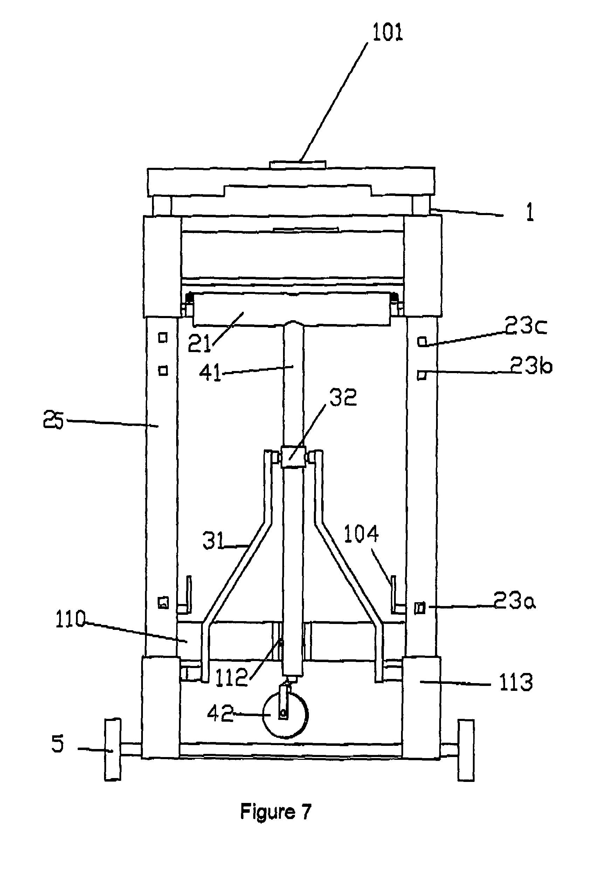

As shown in Fig. 7, the improved trolley comprises a dragging bracket 2, a retractable drawbar 1, wheels 5 mounted on the bottom of dragging bracket 2, a wheel-moving assembly, a sliding-rod assembly and control equipment for controlling the open or close position of the trolley.

The retractable drawbar 1 has a double-pole drawbar configuration. On each side of the dragging bracket 2 there is a groove to receive the retractable drawbar 1 in a sleeve arrangement. The structure to fix the position of the retractable drawbar 1 is conventional. For example, a safety and location device 101 is mounted to control the extension and retraction of a protrusion on the retractable drawbar 1, so that the retractable drawbar 1 can slide along the dragging bracket 2 and be fixed to a given position, as detailed described above. The luggage is fixed on one side of the dragging bracket 2.

A wheel-moving assembly which comprises a wheel shaft 41 and a wheel 42, is set on the side of the pulling direction of dragging bracket 2. One end of wheel shaft 41 is connected to a transverse beam 21 on the central part of dragging bracket 2 while the other end is mounted with the wheel 42. The assembly can be opened toward the advancing direction of the dragging bracket 2 and form a supporting point (shown in Fig. 4).

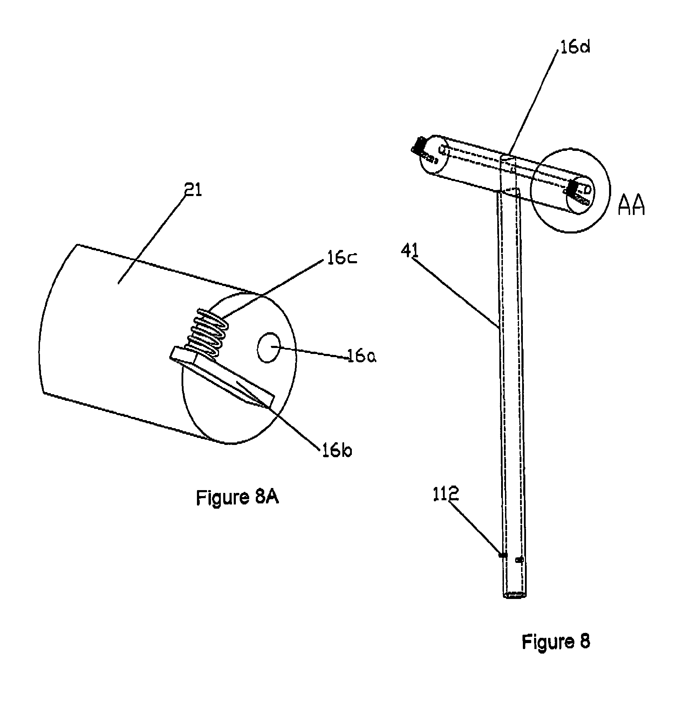

The control equipment comprises: the transverse beam 21 with its block 16b and a push device 104 on the end of retractable drawbar 1 extending and facing the block position. The transverse beam 21 is connected with the dragging bracket 2 through a shaft 16a, shown in Fig. 8 and Fig. 8A, in the middle of which is axially mounted with the wheel-moving assembly. The two ends of the transverse beam 21 extend to form two blocks 16b. It is preferred that the transverse beam 21 is a partially centered rotating shaft and the block 16b is mounted on the apocentric part. This structure makes the center of gravity of the transverse beam 21 lean to the inner part and makes the wheel-moving assembly easier to be opened while also being much easier to pack up by under the force of gravity. On the opposite side of block 16b and push device 104 there is a restorable spring 16c. When the retractable bracket 1 rises up to a fore-set position, the push device 104 will withstand the block 16b. Upon continuing rising, the push device 104 drives the block 16b and causes the transverse beam 21 to rotate clockwise to open the wheel-moving assembly.

The sliding-rod assembly comprises two connecting rods 31 and a sliding sleeve 32. The sliding sleeve 32 surrounds the wheel shaft 41 of wheel-moving assembly and can slide freely along the wheel shaft 41. The two connecting rods 31 are mounted with one side wide. One end of each connecting rod connects to the sliding sleeve 32 while the other end pivotally connects to the bottom bracket 113 of dragging bracket 2.

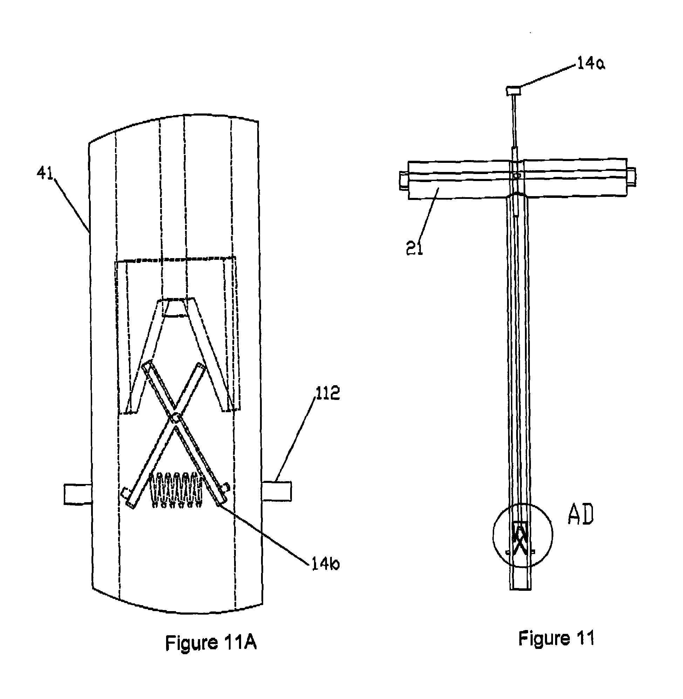

In addition, in the wheel shaft a safety device is mounted, as shown in Fig. 11 and Fig. 11A. The safety device comprises a retractable lockpin 112 axially extending out of the wheel shaft 41 and a lock rod 14a that is set in the wheel shaft 41 for moving and controlling the retractable lockpin 112 by longitudinal movement. The top part of the lock rod 14a extends through a transverse hole 16d on the transverse beam 21. The bottom end of lock rod 14a is an inverse V-type structure. On the bottom end of retractable lockpin 112, an X-type spring loaded device 14b is mounted. The two arms of the X-type spring loaded device 14b are mounted into the inner wall of the inverse V-type structure of lock rod 14a and are slidable against the inverse V-type structure. The lock rod 14a normally compresses the X-type spring loaded device 14b and retracts the retractable lockpin 112. When the wheel-moving assembly is opened, the sliding sleeve 32 moves to the position of retractable lockpin 112 and takes the lock rod 14a up to release the X-type spring loaded device 14b. The X-type spring loaded device 14b pushes the retractable lockpin 112 out of the wheel shaft 41 and stops the sliding sleeve 32.

On the dragging bracket 2 a few location holes are positioned to receive a location projection on the retractable drawbar 1 so that a different positional state is achieved and the user can adjust to get a most comfortable one.

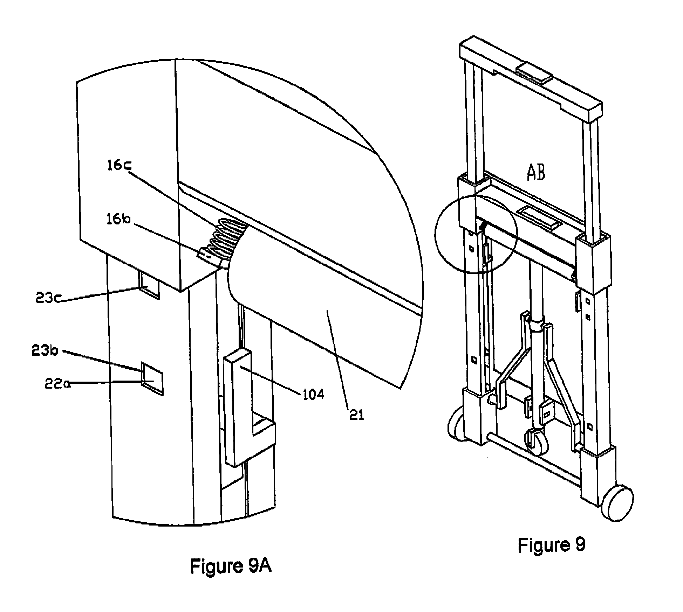

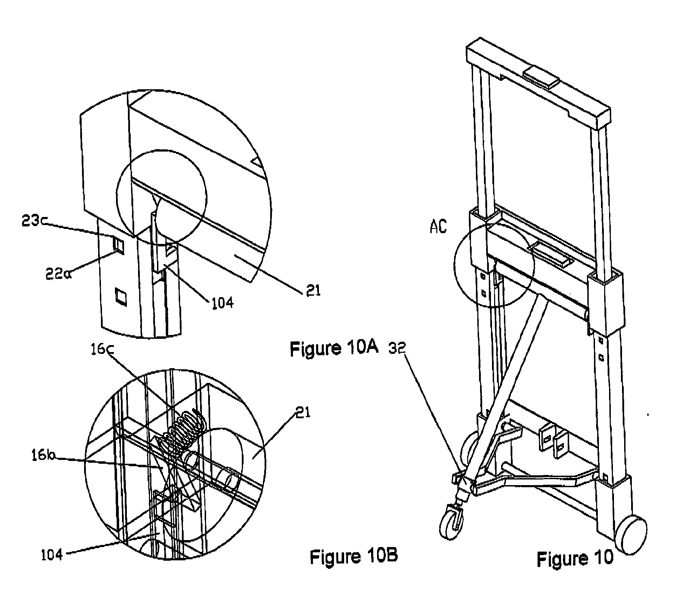

As Fig. 1 shows, when the wheel-moving assembly is packed up, the location projection 22a of retractable drawbar 1 will mate with a location hole 23a. When the location projection 22a mates with another location hole 23b, as shown as Fig. 9 and Fig. 9A, the wheel-moving assembly is still packed up and the whole trolley can be used as a traditional two-wheel system. When the location projection 22a mates with the third location hole 23c, as shown as Fig. 10, Fig. 10A and Fig. 10A, the push device 104 will drive the block 16b and cause the transverse beam 21 to clockwise rotate so that the wheel-moving assembly is opened.

After usage, pushing the safety and location device 101 and vertically pressing down the retractable drawbar 1 at the same time will result in the push device 104 releasing the block 16b. Because of the force of restorable spring 16c and the gravity of wheel-moving assembly, the wheel-moving assembly will rotate counterclockwise until at last it goes back to a groove on a downward beam 110.

### SPECIFIED EMBODIMENT 4

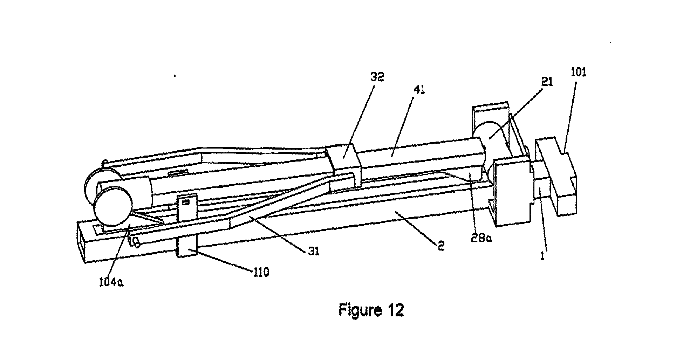

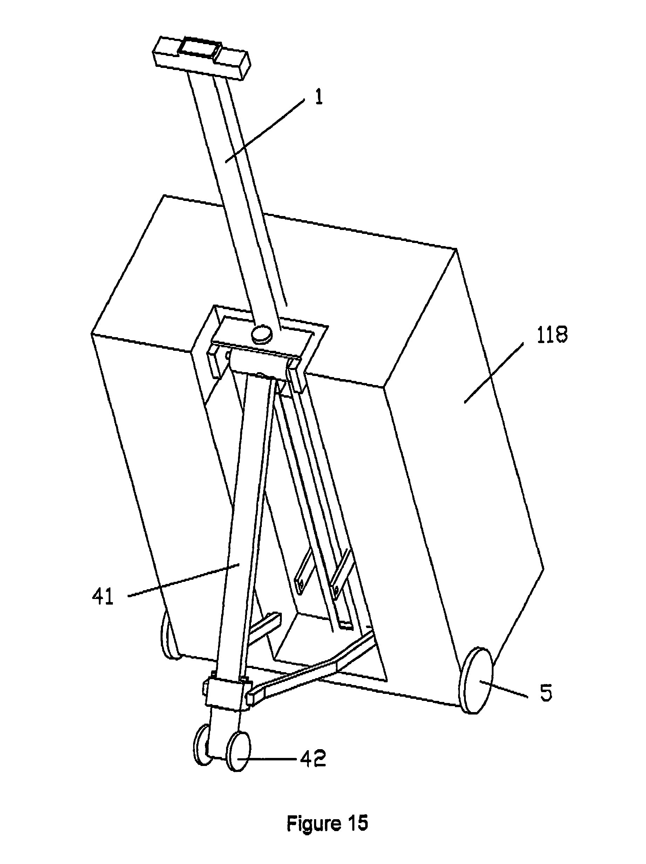

As Fig. 12 shows, this embodiment is adapted to be the trolley for another kind of structure. The trolley comprises a dragging bracket 2, a retractable drawbar 1, a wheel 5 mounted on the bottom of dragging bracket 2, a wheel-moving assembly, a sliding-rod assembly and a control equipment for controlling the open or close position of the trolley. The luggage 118 is mounted on the trolley as shown in Fig. 15.

The retractable drawbar 1 has a single-pole drawbar configuration. In the center of dragging bracket 2 is a groove to release the retractable drawbar 1 in a sleeve-relationship and let the retractable drawbar extend or retract. The structure to fix the retractable drawbar 1 is conventional. For example, a safety and location device 101 is mounted to control the extension and retraction of a location projection on the retractable drawbar 1. The retractable drawbar 1 can slide along the dragging bracket 2 and be fixed at a given position, as detailed described above.

The wheel-moving assembly which comprises a wheel shaft 41 and a wheel 42 is the same as shown in embodiment 3 and is positioned on the side of the pulling direction of dragging bracket 2. One end of wheel shaft 41 connects to a transverse beam 21 on the central part of dragging bracket 2 while the other end is mounted with the wheel 42. They can be opened to the advancing direction of the dragging bracket 2 and form a supporting point.

The sliding-rod assembly, comprising two connecting rods and a sliding sleeve, is also the same as embodiment 3. The arrangement of the control equipment for controlling the open or close position is changed because the retractable drawbar 1 assumes a single-pole structure.

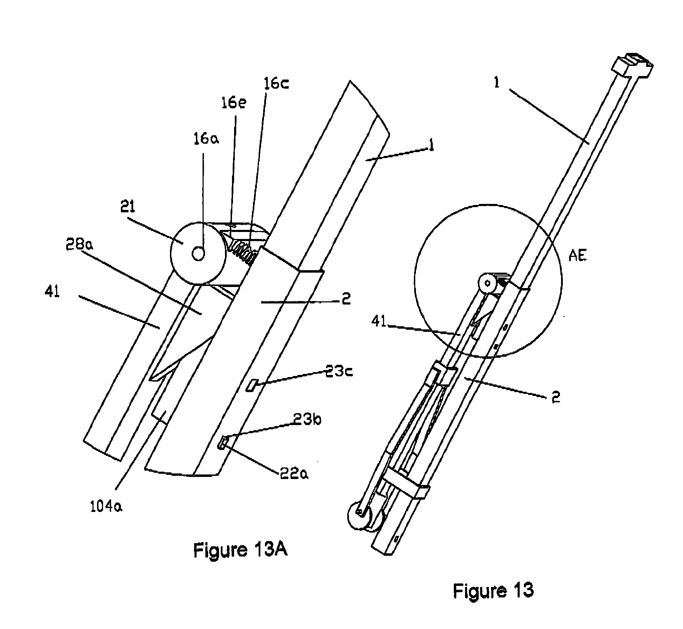

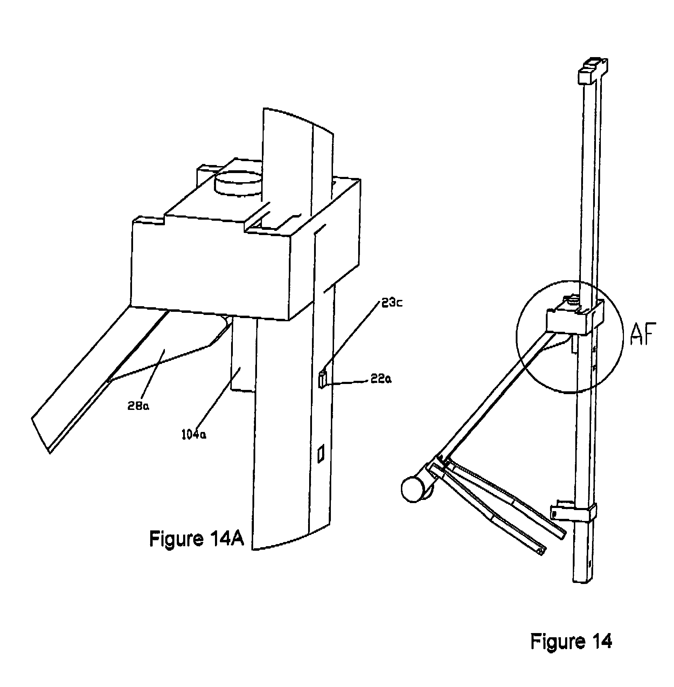

As shown in Fig. 13, Fig. 13A, Fig. 14 and Fig. 14A, a block 28a is positioned on the inner side of a wheel shaft adjacent the transverse beam 21. A push device 104a positioned on the end of retractable drawbar 1 extends from and faces the block 28a. The block 28a and the push device 104a have a bevel as the engaging interface with each other. When the retractable drawbar 1 rises up to some position, the push device 104a will withstand the block 28a. When the retractable drawbar 1 continues to rise up, it will drive the block and force the transverse beam 21 clockwise rotate to cause the wheel-moving assembly to open. On the transverse beam 21 opposite to the side connecting the wheel-moving assembly a projection 16e with a restorable spring 16c is preferably mounted,

Similar with the specification in the above embodiments, on the dragging bracket 2 there are a few location holes 23a, 23b, 23c and a location projection 22a is disposed on the retractable drawbar 1. Different pull states are formed by the location projection being mated to different location holes.

The operation process of this embodiment is the same as embodiment 3 above and need not be described further.

### SPECIFIED EMBODIMENT 5

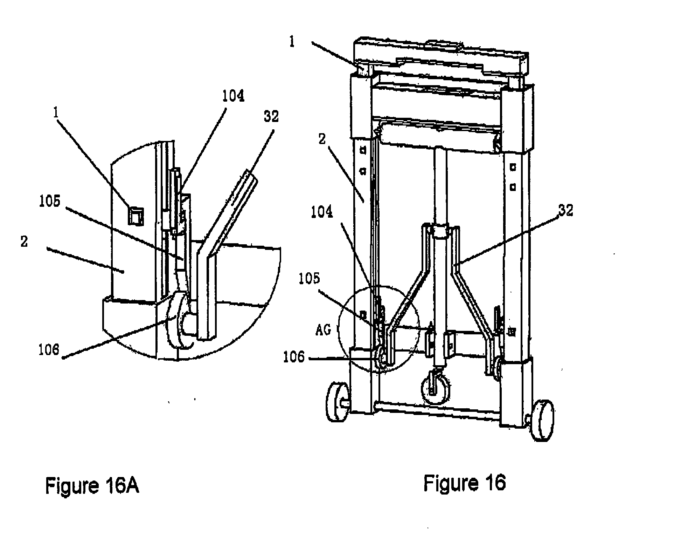

Shown as FIG. 16 and FIG. 16A, what is different between this embodiment and those before is that under the push device 104 a stop device 105 bodily set on the bottom end of the retractable drawbar 1. Relatively a talus 106 is set on the connecting end of one of connecting rods 31 to the dragging bracket 2. This talus 106 is fit to the stop device 105 to stop the connecting rods 31 opening.

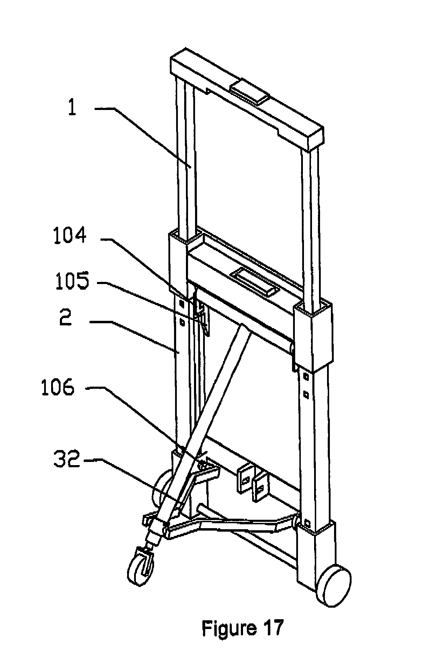

When the retractable drawbar 1 is raised the stop device 105 will release the talus 106, shown as FIG. 17. Then the connecting rods 31 can be opened by the push device 104. All the other working process is the same as said above in other embodiments and here is short to be specified.

## Claims

1. A luggage trolley comprising a dragging bracket, a retractable drawbar, and at least a wheel on the bottom of the dragging bracket, wherein, on the dragging bracket there is a wheel-moving assembly that can be opened to a forward dragging direction and form a supporting point.

2. A luggage trolley as claimed in claim 1, wherein the wheel-moving assembly comprises a wheel shaft and a moving wheel, one end of the wheel-moving assembly being pivotally connected to the dragging bracket and can be opened to the forward dragging direction while the other end of the wheel-moving assembly is mounted with the moving wheel.

3. A luggage trolley as claimed in claim 1, wherein on the dragging bracket there is a fixing assembly to fix an opening angle of the wheel-moving assembly.

4. A luggage trolley as claimed in claim 3, wherein the fixing assembly comprises a sliding sleeve and two connecting rods, the sliding sleeve is mounted on the wheel-moving assembly and the two ends of each connecting rod respectively are pivotally connected to the sliding sleeve and the dragging bracket and can be rotated.

5. A luggage trolley as claimed in claim 3, wherein on the wheel-moving assembly there is a location device to fix the relative position between the fixing assembly and the wheel-moving assembly.

6. A luggage trolley as claimed in claim 5, wherein the location device is a biased projection on the wheel-moving assembly.

7. A luggage trolley as claimed in claim 1, wherein on the dragging bracket there is an opening-control device to open or pack up the wheel-moving assembly, and the opening-control device comprises: a rotating transverse axle radially connected to the wheel-moving assembly, wherein a block is positioned on the rotating transverse axle or the wheel-moving assembly, and a push key on the retractable drawbar can be used to drive the block and open the wheel-moving assembly when being pushed.

8. A luggage trolley as claimed in claim 7, wherein the block transversely extends to connect the two ends of the rotating transverse axle; and the retractable drawbar has two bars while at the bottom of the retractable drawbar a projecting push device is positioned relative to the block.

9. A luggage trolley as claimed in claim 8, wherein the rotating transverse axle is eccentric and the block is positioned on a far end.

10. A luggage trolley as claimed in claim 9, wherein a restorable spring is positioned on the other side of the block opposite to the push key.

11. A luggage trolley as claimed in claim 7, wherein the block is set on an inner side of the wheel-moving assembly; and the retractable drawbar is a single bar while at the bottom of the retractable drawbar a projecting push device is positioned relative to the block, with a bevel forming an engaging interface between the block and the projecting push device.

12. A luggage trolley as claimed in claim 11, wherein on the opposite side of the rotating transverse axle to the wheel-moving assembly there is a projection with a restorable spring.

13. A luggage trolley as claimed in claim 7, wherein the wheel-moving assembly comprises a wheel shaft and in the wheel shaft a safety device is mounted.

14. A luggage trolley as claimed in claim 13, wherein the safety device comprises a retractable lockpin radially protruding out of the wheel shaft, and a lock pole mounted inside the wheel shaft to control the lockpin by longitudinally moving.

15. A luggage trolley as claimed in claim 14, wherein a bottom of the retractable lockpin has an X-type spring loaded device and the relative end of the lock pole is an inverse V-type structure while the two arms of the X-type spring loaded device slide against the inverse V-type structure.

16. A luggage trolley as claimed in claim 7, wherein at corresponding positions of the dragging bracket and the retractable drawbar there are anchor points to fit to each other when being mounted.

17. A luggage trolley as claimed in claim 8, wherein a stop device is bodily set on the bottom end of the retractable drawbar and under the push device, while relatively a talus is set on the connecting end of one of connecting rods to the dragging bracket to fit the stop device and stop the connecting rods opening.
